(19) Europäisches Patentamt / European Patent Office / Office européen des brevets

(11) EP 1 510 134 B1

(12) # EUROPEAN PATENT SPECIFICATION

(45) Date of publication and mention of the grant of the patent:
**12.01.2011 Bulletin 2011/02**

(51) Int Cl.:
***A23G 9/34*** *(2006.01)*

(21) Application number: **04020539.5**

(22) Date of filing: **30.08.2004**

(54) **Starch for frozen desserts**

Stärke für gefrorene Süssspeisen

Desserts glacés comprenant de l'amidon

(84) Designated Contracting States:
**AT BE BG CH CY CZ DE DK EE ES FI FR GB GR HU IE IT LI LU MC NL PL PT RO SE SI SK TR**

(30) Priority: **29.08.2003 US 498834 P**
**16.10.2003 US 511765 P**
**26.08.2004 US 926555 P**

(43) Date of publication of application:
**02.03.2005 Bulletin 2005/09**

(73) Proprietor: **BRUNOB II B.V.**
**6824 BM Arnhem (NL)**

(72) Inventors:
- **Koxholt, Susanne**
  **Whitehouse Station, New Jersey 08889 (US)**
- **Whaley, Judith K.**
  **Hillsborough**
  **New Jersey 08844 (US)**
- **Liu, Yayun**
  **Franklin Park**
  **New Jersey 08823 (US)**

(74) Representative: **Held, Stephan et al**
**Meissner, Bolte & Partner GbR**
**Postfach 86 06 24**
**81633 München (DE)**

(56) References cited:

| | |
|---|---|
| **EP-A- 0 784 935** | **EP-A- 1 076 067** |
| **WO-A-03/015530** | **US-A- 4 264 637** |
| **US-A- 4 510 166** | **US-A- 5 175 013** |
| **US-A- 5 562 937** | **US-A1- 2003 108 649** |

- **AHMAD F B ET AL: "Effect of galactomannans on the thermal and rheological properties of sago starch" JOURNAL OF AGRICULTURAL AND FOOD CHEMISTRY, vol. 49, no. 3, March 2001 (2001-03), pages 1578-1586, XP002310157 ISSN: 0021-8561**

Remarks:
The file contains technical information submitted after the application was filed and not included in this specification

EP 1 510 134 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a starch for use in frozen food products. More specifically, the present invention is directed towards a functional starch or starch derivative for use in frozen desserts in order to obtain improved structure characteristics, including slow melt down, excellent shape retention, reduced iciness, greater heat shock stability and reduced expansion and contraction of the desserts due to variations in altitude or pressure.

In addition to their rich flavor, frozen confectioneries are enjoyed for their creaminess and smoothness. However, in order to preserve these characteristics, these products have to be handled and stored with care. Unfortunately, even small temperature variations can occur during storage, distribution and handling. For example, such variations can occur when a consumer buys a frozen product and does not consume it right away, as in the time from when a consumer purchases such a product at a grocer and places that product in his freezer. Partial or even substantial defrosting of the product can occur before it is refrozen. This temperature cycling can result in ice crystal growth in the product, as well as loss in product shape. Such growth affects both the visual appearance and organoleptic properties of the frozen product, thereby reducing its quality and appeal, at least as perceived by the consumer. The most frequently occurring textural defect in ice cream is due to ice crystal growth, and is the primary limitation to its shelf life. As such, it is desirable for frozen desserts to be stable against 'heat shock', or the cyclic conditions of partial thawing and refreezing that occur during typical storage, shipping and handling of these products.

As used herein, a frozen dessert, frozen confectionery or frozen product refers to a product in which water is present in both the liquid and frozen state. Examples of frozen deserts include ice cream, ice milk, water ice and parfaits. As used herein, frozen novelties refer to frozen desserts such as those available on a stick or in sandwiches or cones.

Ice crystals in frozen products need to be numerous and of small, nearly uniform size to avoid detection when eaten. Because ice crystals are relatively unstable, during storage they undergo changes in number, size and shape, which is collectively referred to as recrystallization. While some recrystallization occurs naturally at constant temperatures, by far the majority of it occurs due to temperature fluctuations or heat shock. An increase in temperature during the frozen storage of a product such as ice cream causes some of the ice crystals, particularly the smaller ones, to melt. As the temperature decreases, that water refreezes without renucleation, instead depositing on the surface of larger crystals. As such, heat shock or temperature cycling in frozen products reduces the total number of ice crystals and increases the mean ice crystal size.

To a consumer, the perception of coldness and iciness of ice cream is directly related to the amount of ice formed in the ice cream and the size of the ice crystals. Typically, consumers can detect ice crystals larger than about fifty (50) microns. Such large ice crystals contribute to the coarseness and iciness of the ice cream. For a typical ice cream, the amount of ice formed and the crystal size distribution are mainly determined by the formulation, processing, and storage conditions as outlined below.

Ice crystallization is also affected by the glass transition temperature (Tg') and the freezing point of the ice cream. In a maximally freeze-concentrated solution, an invariant condition occurs at temperature Tg' and concentration Cg' (or unfreezable water Wg'), depending on the particular mixture of compounds in the formulation. The unfreezable water Wg' is that water rendered unfreezable in the maximum freeze-concentrated solution due to the low diffusivity in the glassy state. When ice cream is stored below Tg', the system is in the glassy state. In this glassy state, the diffusion-controlled processes that typically result in reduced quality and stability can be largely inhibited. Above Tg', the system is in a rubbery state where the translational diffusion is free to occur. The rate of diffusion-controlled deterioration increases exponentially with increasing $\Delta T$, the temperature difference between storage temperature T and Tg' ($\Delta T$ = T - Tg'), in agreement with William-Landel-Ferry ('WLF') kinetics.

Various stabilizing gums have been used as additives in an attempt to improve the heat shock stability and creaminess of frozen food products. Such stabilizing gums have included gelatin, agar, gum acacia, guar gum, carob or guar seed flour, locust bean gum, carrageenan, alginate, carboxymethyl cellulose, xanthan and the like, with each exhibiting their own set of advantages and disadvantages. Microcrystalline cellulose ("MCC") and carboxymethyl cellulose are often used in combination with other stabilizing gums to improve functional effectiveness. For example US 4 264 637 discloses the use of microcrystalline Cellulose and carboxymethyl cellulose in freezable-gel-confection compositions. As optional additional ingredient Xanthan gums, sodium alginate or modified starches were used. For compositions based on these ingredients freezable confections were obtained which have a pudding-like consistency at room temperature (20 °C) and which freeze to a chewy and virtually non- icy product. MCC and cellulose gum can be used together to reduce ice crystal growth. However, MCC can continue to activate during aging or subsequent processing, resulting in unanticipated viscosity.

While gums improve stability, their use has several disadvantages. For example, the amount of stabilizing gum required to provide heat shock stability can result in a product having an unacceptably greasy and/or gummy mouthfeel. Further, products containing such stabilizing compounds are regulated and often poorly perceived by the public. In addition, these additives can be expensive. Several attempts have been made to replace stabilizers in frozen products by replacing them at least in part with other components. However, stabilizers have the added benefit of reducing the size of ice crystals in those products. By replacing all or part of those stabilizers, the size of ice crystals in the product can increase, resulting in a less desirable product.

Emulsifiers provide stability and creaminess to frozen products by facilitating an interface between the aqueous phase and the fat phase of the product. Milk or milk proteins and eggs yolks are natural sources of emulsifiers useful for their water-binding properties. Commercially available emulsifiers are generally derived by chemical reactions with naturally occurring glycerides.

Emulsifiers added to ice cream reduce the stability of this fat emulsion by replacing proteins on the surface of the milkfat. For example, ice cream is a frozen dessert that is both an emulsion and foam. When an ice cream mixture is whipped, the fat emulsion begins to break down and the fat globules begin to flocculate or destabilize. This partially coalesced fat stabilizes air bubbles that are whipped into this mix. Without emulsifiers, the fat globules would be able to resist this coalescing due to the proteins being absorbed to the fat globule, causing the air bubbles to not be properly stabilized and affecting the texture or smoothness of the ice cream.

Emulsifiers also affect the melt down of the ice cream. When ice cream is placed in an ambient environment, the ice cream melts and the fat-stabilized foam structure collapses. Melting is controlled by outside temperature and rate of heat transfer. However, even after the ice crystals melt, the ice cream does not collapse until the fat-stabilized foam structure collapses. This collapse is a function of the extent of fat destabilization/partial coalescence, which is controlled by numerous factors, including but not limited to, emulsifier concentration, the type of emulsifier, processing conditions and so forth.

The frozen product ice cream is basically composed of milkfat, serum solids or milk solids-non-fat, sweeteners, stabilizers and emulsifiers, and water. Stabilizers and emulsifiers were previously discussed. Water found in ice cream comes from the milk or other ingredients or is added. The milkfat or butterfat is typically obtained from sweet or heavy cream, and provides flavor, smooth texture and body to the ice cream. Other types of fats, such as palm oil, can also be used. The serum solids contain the lactose, caseins, whey proteins, minerals and ash content, and can be found in concentrated skimmed milk or skim milk powder. Sucrose is typically the main sweetener. At least a portion of the sweetener can be obtained from corn syrup solids, which provides a firmer and chewier body to the ice cream. Liquid and solid corn syrup is available in various dextrose equivalents ('DE'), which is a measure of the reducing sugar content of the syrup calculated as dextrose and expressed as a percentage of the total dry weight. As the DE increases, the sweetness increases and the molecular weight decreases.

The formulation used for manufacturing frozen desserts varies depending upon the type of product desired. Types of frozen products include economy brands typically having the legal minimum fat and total solids content, standard brands, premium brands and super premium brands, as well as a hard frozen, soft frozen, low fat, light, sherbet, sorbet or frozen yogurt product. As the amount of fat increases in the formulation, the frozen product becomes less viscous.

Ice cream ingredients are blended together according to the formulation selected to produce the ice cream mix. The mix is then pasteurized, followed by homogenization, or vice versa. Once homogenized and pasteurized, the mix is aged to allow the fat to cool and crystallize, and the proteins and polysaccharides to fully hydrate. After aging, the mix is frozen, during which time particulates such as fruit, nuts, candy, cookies, etc. may be added to the mix, followed by hardening of the ice cream, typically at temperatures of -30 to -40°C. The freezing and hardening is best done at a fast rate, as a fast freezing rate promotes the formation of many small ice crystals instead of fewer larger ice crystals.

The temperature at which ice cream freezes is affected or depressed by the concentration of sweeteners and/or their molecular weight. For example, a mix having a higher concentration of sugars and/or sugars of a lower molecular weight will have a lower freezing temperature than a mix having a lower concentration of sugars and/or sugars of a higher molecular weight. The lower the freezing temperature, the softer the ice cream, the greater the freeze out of the water during hardening, and the greater the susceptibility of the ice cream to heat shock.

For low fat or reduced fat frozen desserts, particularly frozen novelties, shape retention is necessary for product quality. It is known that melt characteristics of frozen desserts are relevant to shape retention. For ice cream, melt down is strongly influenced by the fat and air domains of the ice cream. As explained above, both fat and emulsifiers in the dessert affect melt down. For a low or reduced fat formula, melt down can be critical. Simply adding more emulsifier to make up for the loss of fat can be expensive and affect the characteristics of the ice cream, and is therefore not a preferred solution.

Frozen desserts are also affected by altitude. When frozen desserts such as ice cream or frozen novelties are transported from a low altitude to a higher altitude (*e.g.*, from sea level to a mile-high elevation), the reduction in atmospheric pressure causes the air cells in the frozen dessert to expand and collapse. In the case of ice cream, this results in the ice cream pushing out of the container, often popping off the lids (expansion) and pulling away from the sides of the container (shrinkage). For frozen novelties, this can result in cracked or broken chocolate coatings and/or separation from the coating. Understandably, such product defects are unacceptable from a consumer standpoint.

Various starch-based products have been marketed and sold for use in frozen desserts. These include converted starches, stabilized starches and crosslinked starches. It is well known in the food industry to use starch as a thickener and/or binder, *i.e.*, as a stabilizer. For example EP 1 076 067 discloses sago fluidity starch and the use thereof in various food products such as confectioneries, e.g starch gum candies, noodles, puddings and others. The used starches are converted to a water fluidity of 40-80 and exhibit fast gelling properties, high gel strength and good elasticity. US 2003/0108649 discloses the use of low amylase tapioca starch for the use in food products. This starch is described to have good solution stability, including low temperature and freeze-thaw stability. Typically, starches have been used in frozen confectioneries as a fat substitute or texturing agent. With the trend toward diminishing sugar in frozen products such as ice cream, starch-based products such as hydrogenated starch hydrolysates (polyols) have proven useful alternatives to sweeteners such as maltodextrin and polydextrose. These starch-based substitutes are typically the liquid and/or solid corn syrups previously discussed. An example of the use of corn syrups is given in US 5 175 013 which describes their use in frozen diary dessert products such as ice cream and yogurt desserts. The products additionally comprise a partially hydrolysed starch component which is preferably derived form corn starch. The products exhibit an enhanced stability against heat shock and creaminess with substantially reduced iciness. However, these substitutes do not function in reducing melt down and/or reducing iciness in frozen desserts, nor do they function in controlling expansion or contraction of those desserts. Further ice cream compositions comprising starch as a component are disclosed e.g. in the following documents:

US 5 562 937 discloses functional waxy corn starch with improved meltdown characteristics.

The starches used generally are highly enzymatically hydrolyzed by the use of exo-enzymes such as beta-amylase or glucoamylase to convert up to 60 % by weight of the starch to maltose or glucose.

US 4 510 166 discloses starches having a DE of less than 5 and their aqueous dispersions having a hot flow viscosity of at least 10 sec. at 10-50% solids and 55° C, which are capable of forming strong gels.

WO 03/015530 discloses starches which may be chemically or physically, modified, which have a gelatinization temperature of between 50 and 85° C and a granule diameter of between 3 and 100 μm. The starches were used to partially replace the milk solids-not-fat traditionally used in ice cream which improved their resistance to heat shocks, while maintaining desirable creaminess and mouth feel.

EP 0 784 935 discloses the use of non-gelling waxy starches having greater than 30 % by weight of short chains with a degree of polymerization of less than 13. The Starches were converted to a water fluidity of about 10 to 80 and are characterized by good mouthfeel and freeze-thaw stability making them useful as fat replacers.

Accordingly, there is a need for a starch product for use in frozen desserts that functions in reducing the melt down of the dessert when exposed to temperature fluctuations during storage and distribution, thereby aiding in retaining the shape of the frozen product, particularly novelty products. Further, there is a need for a starch product for use in frozen desserts that functions in reducing the risk of ice crystal growth during temperature cycling. Finally, there is a need for a starch product for use in frozen desserts that functions in reducing the expansion and shrinkage of the product when transported at high altitudes.

The present invention is directed towards from ice cream desserts comprising a functional starch and/or starch derivatives for obtaining improved structure characteristics, including a reduction in melt down, improved shape retention and/or decrcase in ice crystal growth during temperature

cycling. The frozen ice cream dessert can include fat, sweeteners, milk solids-not-fat, stabilizers, emulsifiers, water and starch. The functional starch and/or starch derivative of the present invention can be used to replace at least a portion of any of the other solids, or can be added on top of those solids.

In one aspect, the invention includes a frozen ice cream dessert formulated with at least one functional starch, wherein the at least one starch is able to gel during freezing conditions and the frozen dessert mix or formulation has a tan δ of 0.4 or less. The at least one starch is a degraded or converted starch having a water fluidity ("WF") of from 20 to 65. The at least one starch used in the formulation is waxy starch. Natural (base) starches typically are a mixture of amylose and amylopectin. Amylopectin starches typically refer to those starches containing at least about 60 % by weight amylopectin. An amylopectin starch can be a waxy starch (*i.e.*, no more than about 10% amylose by weight), including waxy corn (waxy maize). The functional starch, when added to the frozen dessert, provides an improved reduction in the melt down of the frozen dessert versus a frozen dessert formulated without the functional starch. For example, a frozen dessert prepared with the functional starch can have a melt down of 80% or less versus frozen desserts that is completely melted down (100%) when formulated without the starch over the same time frame.

In one aspect, the invention includes a frozen ice cream dessert formulated with the above at least one functional starch, wherein the starch gels quickly upon freezing the dessert mix containing the starch. In another aspect the quick gelling functional starch is an amylose-containing starch. In a further aspect the invention includes a frozen dessert formulated with the above at least one functional starch, wherein the starch gels in the dessert mix after repeated exposure to temperature cycling between, *e.g.*, about -18°C and about -6.7°C. The functional starch that gels when exposed to such temperature cycling is a waxy starch. The gelling behavior of such useful functional starches can be determined by measuring the tan δ of the dessert mix prepared with the starch after holding the mix, *e.g.*, at about -6.7°C for approximately seven to ten days.

The frozen dessert is ice cream. In one aspect, the frozen dessert is low fat ice cream. The frozen dessert also includes frozen novelties that can be manufactured and sold in various shapes. The starch functions in providing shape retention for the novelty. In another aspect, the starch functions in providing shape retention when the novelty is heat shock treated, *e.g.,* for up to 12 freeze/thaw cycles, with each cycle occurring over a twenty-four hour period.

In one aspect, useful starches for frozen ice cream desserts have a glass transition temperature ($T_g$') of about -6°C or greater. In another aspect, useful starches have a water binding property ($W_g$') of about 0.30 g/g or greater. The starches of the present invention are able to provide improved ice crystal inhibition in a frozen ice cream dessert as compared to a frozen dessert without the starch.

A process for preparing frozen ice cream confectioneries is also provided. The process includes the steps of preparing a mixture of ingredients for the frozen confectionery wherein the mixture has a tan δ of 0.4 or less when comprising a degraded or converted starch having a water fluidity ("WF") of from 20 to 65, and wherein the starch comprises a waxy starch it includes at least one functional starch, and freezing the mixture within a temperature range of from -2°C to -8°C wherein the freezing effects gelling of the starch. Frozen ice cream confectioneries prepared according to this process have an improvement in meltdown over similar frozen confectioneries that do not have the functional starch as an ingredient. For example, frozen ice cream confectionaries prepared with the functional starch can have an improvement (reduction) in meltdown of at least 80%. The process can also include the step of pasteurizing the mixture within a temperature range of from 70°C to 100°C. In a further aspect, the process includes the step of homogenizing the mixture within a pressure range of from 2 MPa to 20 MPa. In an additional aspect, the process includes the step of cooling the mixture within a temperature range of from 2°C to 8°C. The process can also include the step of aging the mixture for a time period of 4 hours to 24 hours. The process can include the step of hardening the mixture at a temperature of from -20°C to -40°C, The process can also include the step of replacing at least part of solids ingredients of the frozen confectionery with the functional starch.

The present invention further provides for a functional starch useful in frozen desserts. The frozen dessert includes a tan δ of 0.4 or less when formulated with the functional starch. The functional starch is able to gel during freezing conditions.

The present invention further provides a frozen ice cream dessert comprising a functional starch wherein the starch provides the frozen dessert a reduced amount of expansion and shrinkage of the ice cream when exposed to a defined vacuum as compared to a frozen dessert without the starch. Such a frozen ice cream dessert is beneficial commercially where the frozen desserts are transported over high altitudes.

The manner in which these objectives and other desirable characteristics can be obtained is explained in the following description and attached drawings in which:

Figure 1 is a graph illustrating the percent meltdown of various ice creams after four hours at 19°C.

Figure 2 is a graph illustrating the correlation between the meltdown of ice cream and the tan δ of the mix after seven to eight days at -6.7°C.

Figure 3 is a photograph illustrating the effect in meltdown of an ice cream containing a starch of the present invention after heat shock treatment as compared to freshly prepared ice cream.

Figure 4 is a melt down curve of an ice cream containing 3% of a starch according to the present invention as compared to a control ice cream containing no starch.

Figure 5 is a series of six photographs illustrating the effect of altitude on ice cream containing 3% of a starch according to the present invention as compared to a control ice cream containing no starch.

The starch base material used for the present invention may be derived from any source, including cereal or root starches. Typical sources for the starches are cereals, tubers, roots, legumes and fruits. Native starch sources include, for example, any variety of corn (maize), pea, potato, sweet potato, banana, barley, wheat, rice, oat, sago, amaranth, tapioca, arrowroot, canna, sorghum and waxy and high amylose varieties thereof. As used herein, "waxy" includes starches containing no more than about 10% amylose by weight. As used herein, the term "high amylose" includes starches containing at least about 40% by weight amylose. Preferably, the starch base material is an amylopectin starch such as a waxy corn starch or an amylose-containing starch.

The granular starch base can be one that has been lightly converted or hydrolyzed to a water fluidity ("WF") of 20 to 65. The term "water fluidity" has a very specific meaning as described further herein below. The starch is converted to its fluidity or thin-boiling form using a suitable method of degradation that results in the modified starch defined herein. Such degradation includes, for example, mild acid hydrolysis with an acid such as sulfuric or hydrochloric acid, conversion with hydrogen peroxide, or enzyme conversion. Converted starch products can include blends of different starches converted by various techniques as well as converted starch(es) blended with unconverted starch(es). Commercially, starch is typically converted by acid or enzyme conversion techniques. Hydrogen peroxide can also be used to convert or thin the starch, either alone or with metal catalysts.

As noted above, the starch of the present invention can be converted to water fluidity ("WF") of from 20 to 65. Water fluidity, as used herein, is an empirical test of viscosity measured on a scale of 0-90 wherein fluidity is inversely proportional to viscosity. Water fluidity of starches is typically measured using a rotational shear-type viscometer (commercially available from Thomas Scientific, Swedesboro, New Jersey), standardized at 30°C with standard oil that has a viscosity of 24.73 cps and requires 23.12±0.05 sec for 100 revolutions. Accurate and reproducible measurements of water fluidity are obtained by determining the time which elapses for 100 revolutions at different solids levels depending on the starch's degree of conversion - as the degree of conversion increases, the viscosity decreases and the WF values increase.

The base material can be modified either chemically or physically using techniques known in the art. The modification can be to the base or the converted starch, though typically the modification is carried out after conversion.

Physically modified starches, such as thermally inhibited starches described in International Publication WO 95/04082, may also be suitable for use herein. Physically modified starches are also intended to include fractionated starches in which there is a higher proportion of amylose.

In another embodiment, cold water soluble ('CWS') starches may be suitable for use. CWS starches are pregelatinized, cold water swelling, or cold water dispersible starches. CWS starches have been gelatinized and dried by the manufacturer before sale to the customer in a powdered form. They can be made by drum drying, spray drying or extrusion of either native or modified starch. They develop viscosity when dispersed in cold or warm water without the need for further heating. Pre-gelatinized starch is also known as precooked starch, pregelled starch, instant starch, cold water soluble starch, or cold water swelling starch.

Chemically modified starches include, without limitation, crosslinked starches, acetylated and organically esterified starches, hydroxyethylated and hydroxypropylated starches, phosphorylated and inorganically esterified starches, cationic, anionic, nonionic, and zwitterionic starches, carboxymethyl starch, and succinate and substituted succinate derivatives of starch. Such modifications are known in the art, for example in MODIFIED STARCHES: PROPERTIES AND USES, Ed. Wurzburg, CRC Press, Inc., Florida (1986).

When crosslinked, the starch is reacted with any crosslinking agent capable of forming linkages between the starch molecules. Typically crosslinking agents suitable herein are those approved for use in foods, such as epichlorohydrin, linear dicarboxylic acid anhydrides, acrolein, phosphorus oxychloride, and soluble metaphosphates. Preferred crosslinking agents are phosphorus oxychloride, epichlorohydrin, sodium trimetaphosphate (STMP), and adipic-acetic anhydride, and most preferably phosphorus oxychloride.

The crosslinking reaction itself is carried out according to standard procedures described in the literature for preparing crosslinked, granular starches. Examples of such art include U.S. Patent Nos. 2,328,537 and 2,801,242. Of course, the exact reaction conditions employed will vary with the type of crosslinking agent used, as well as the type of starch base, the reaction scale, etc. The reaction between the starch and the crosslinking agent can be carried out in aqueous medium. In this preferred method, the starch is slurried in water and adjusted to the proper pH, followed by addition of the crosslinking agent.

The amount of crosslinking agent necessary to give a product having the characteristics defined herein will vary depending on, for example, the water fluidity level of the starch, the type of pregelatinization employed, the type of crosslinking agent used, the concentration of the crosslinking agent, the reaction conditions, and the necessity for having a crosslinked starch that falls within a specified range of crosslinking as determined by its viscosity characteristics. One skilled in the art will recognize that it is not the amount of crosslinking agent added to the reaction vessel that determines the properties of the final product, but rather the amount of reagent that actually reacts with the starch, as measure by the Brabender viscosities. Still, the amount of crosslinking agent used for reaction will generally vary from about 0.01% to about 0.07% by weight, depending on the water fluidity of the starch. The exact range can also depend on the pregelatinization process. The type of crosslinking agent used can result in a larger or smaller amount employed. However, in all cases the amount of crosslinking agent should be at least 0.005% by weight.

Any starch or starch blends having suitable properties for use herein may be purified, either before or after any modification or conversion, by any method known in the art to remove starch off flavors, odors, or colors that are native to the starch or created during processing. Suitable purification processes for treating starches are disclosed in the family of patents represented by European Patent No. 554 818. Alkali washing techniques are also useful. Examples of such washing techniques are described in the family of patents represented by U.S. Patent Nos. 4,477,480 and 5,187,272.

The starch may be used in any amount necessary to achieve the characteristics desired for the particular end use application. In general, the starch is used in an amount of at least up to about 4% by weight of the product.

Starches suitable for the present invention include waxy starches having long outer branches, *e.g.*, waxy corn, where the amylopectin is derived from starch base. Amylose-containing starches from a variety of bases are also useful as long as they do not comprise more than about 10% amylose by weight. Any of these waxy and amylose-containing starches can be in their native form, lightly converted, crosslinked, and/or dextrinized. Other useful starches include the above starches that have been enzyme or acid converted to a lower molecular weight. A light stabilization (DS<0.02) can be tolerated as long as the starch gels under freezer conditions in the ice cream system. Preferably, the starch is an waxy or amylose-containing starch wherein the amylopectin is derived from a starch base having long outer branches. Preferably, the starch base is waxy corn.

The starch is a starch that gels during freezing. Gels are defined in many different ways in the art. For the purpose of the present invention, the gel character of a particular ice cream mix after holding in the freezer is quantified based on the measurement of the tangent of the phase angle ("tan δ") for that sample. The tan δ for materials varies from values much higher than one to values much lower than one. Those materials which have tan δ > 1 are typically viewed as liquid-like (under the conditions of measurement) while those with values of tan δ < 1 are viewed as solid or gel-like. Compare also F.B. Ahmad and P.A. Williams, Journal of Agric. Food Chem. 49:1578-86 (2001), wherein predominantly elastic and viscous behaviour is attributed to tan values of < 1 and > 1 respectively. This study deals with the thermal and rheological properties of sago starch in the presence of various concentrations of locust bean gum and guar gum of various molecular masses. Materials which have tan δ = 1 are often described as critical gels, meaning that they represent a critical state of matter between liquids and solids. It has been discovered that those ice cream mixes containing starches have a tan δ < I after holding in the freezer at -6.7°C provide the best resistance to melt-down, and

therefore provide the best shape retention of frozen novelties. Further, such functional starch containing mixes are able to reduce expansion and contraction of the frozen dessert when exposed to variations in atmospheric pressure, such as transportation of the product at high altitudes. The starches of the present invention result in a tan 8 of less than about 0.4 when measured in a model ice cream system.

Typically, the Wg' of carbohydrates decreases as the Tg' value increases. Starches that have a high Tg' and low Wg' often cannot provide adequate ice crystal growth inhibition without causing serious negative impact on texture. Accordingly, a series of starch samples from various botanical sources having different chemical substitutions, treatment, and molecular weight were measured for their Tg' and Wg' values in water. In one aspect, inhibition of ice crystal growth in frozen desert during temperature cycling was provided with starches having higher Tg' and Wg' values. Those starches having a Tg' higher than -6°C and a Wg' higher than 0.30 in water provide significant ice crystal reduction when used at 2-4% in the ice cream formulation described *supra.*

In addition to the starch, the ingredients used for making the frozen ice cream dessert include milkfat, milk solids-not-fat, sweeteners, stabilizers, emulsifiers and water. The fat component can be vegetable or animal fat, hydrogenated or otherwise. The vegetable fat can be a mixture of fats, such as palm, coconut or palm kernel oil. The milk solids-not-fat can include powdered or concentrated skimmed milk, as well as powdered or concentrated defatted sweet whey.

Sweeteners commonly used include sucrose, glucose, fructose, corn syrup or corn syrup solids having a dextrose equivalent ('DE') varying from about 20 to about 65. The frozen ice cream dessert can include a combination of sweeteners. Ingredients can also include colorings and/or flavorings. Further, the frozen ice cream dessert can optionally include fruit or fruit pieces, nuts or candies.

Stabilizing agents such as those previously discussed can be used in the formulation of the frozen ice cream dessert, Likewise, emulsifiers such as those previously discussed can be used. The stabilizer(s) and emulsifier(s) are used in an amount of about 0.0% to about 1.0%. Typically, as the amount of fat in the frozen ice cream dessert decreases, the amount of stabilizer increases.

The proportion of the above ingredients, such as the ratio of starch and sweeteners permits increased stability of the products. According to the present invention, this stability is made through the replacement of at least a portion of the total solids with starch. By replacing at least a portion of the solids with starch, the solid content of the product is maintained while maintaining the smoothness and creaminess of the product. By at least partially replacing the solids with starch, the melt down of the products is slowed and greater heat shock stability provided..

The process for preparing the frozen ice cream desserts is as follows. A mixture of the ingredients is prepared, with the mixture blended long enough so as to avoid foaming and ensure proper hydration of the ingredients. The mixture is then pasteurized and homogenized according to standard techniques in the art. The homogenization can be done in one or two steps. The mixture is then cooled to a refrigeration temperature, which is typically 2°C to 8°C, and aged as needed, typically for a period of 4 to 24 hours. The steps of pasteurization, homogenization and cooling can be done in batch steps or continuously. After aging, the mixture is then rapidly frozen, typically at -2°C to -18°C to a product overrun of 30% to 120%. During freezing and any subsequent temperature cycling, gelation of the starch can occur. This frozen mixture is then hardened, typically to a temperature of -20°C to -40°C for a period of 12 to 48 hours.

In the examples that follow, all parts and percentages are given by weight and all temperatures in degrees Centigrade (°C) unless otherwise indicated. The following examples are presented to further illustrate and explain the present invention and should not be taken as limiting in any regard. All percents used are on a weight/weight basis. The following analytical and testing procedures were used to characterize the starch products herein.

EXPERIMENTAL - PROCEDURAL

A. <u>Starches Evaluated</u>

Numerous starches were evaluated for effectiveness as to shape retention (*i.e.*, melt down), reduced iciness (*i.e.*, minimized growth of ice crystals), and reduced expansion/contraction due to changes in atmospheric pressure (*e.g.,* transporting at high altitude) in ice cream against a low fat (5%) control and a regular or full fat (10%) commercially available ice cream. Starches were also evaluated for their effectiveness as to the prevention of expansion and shrinkage of ice cream due to atmospheric pressure changes when ice cream is transported over high altitudes. Seventeen different illustrative starch samples are identified in Table I below

**Table I - Description of Starches**

| ID # | Short Description | Starch Preparation |
|---|---|---|
| 1 | Native waxy corn starch | unmodified waxy corn starch |
| 2 | Acid converted waxy corn starch (20 WF) | waxy corn starch treated with up to approx 1.0% HCl at 52 C until a desired WF up to 20 is obtained |
| 3 | Acid converted waxy corn starch (40 WF) | waxy corn starch treated with up to approx 1.0% HCl at 52 C until a desired WF up to 40 is obtained |
| 4 | Acid converted waxy corn starch (60 WF) | waxy corn starch treated with up to approx 1.0% HCl at 52 C until a desired WF up to 60 is obtained |
| 5 | Acid converted sago starch | sago starch treated with approx 0.7% HCl at 52 C until a approx 59.5WF is obtained |
| 6 | Native regular corn starch | unmodified regular corn starch |
| 7 | Acid converted sago starch treated with octenyl succinic anhydride | sago starch treated with approx 0.7% HCl at 52 C until a approx 59.5WF) is obtained and further treated with OSA to obtain approx 1.75% bound OSA |
| 8 | Acid converted waxy corn starch (80 WF) | waxy corn starch treated with up to approx 3.0% HCl at 52 C until a desired WF up to 80 is obtained |
| 9 | Native waxy rice starch from Bangkok Starch Company | unmodified waxy rice starch |
| 10 | Waxy corn starch treated with propylene oxide and phosphorous oxychloride | waxy corn starch treated with PO to obtain approx 6.6% bound PO and further treated with approx 0.004% POCl3 |
| 11 | Tapioca starch treated with propylene oxide and phosphorous oxychloride | Tapioca starch treated with PO to obtain approx 5.0% bound PO and further treated with approx 0.011% POCl3 |
| 12 | Acid converted waxy corn starch treated with propylene oxide | Waxy corn starch treated with up to approx 1.0% HCl at 52 C until a desired WF up to 60 is obtained and further treated with PO to obtain approx 5.2% bound PO |
| 13 | Acid converted sago starch treated with propylene oxide | Sago starch treated with approx 0.7% HCl at 52 C until a approx 59,5WF is obtained and further treated with PO to obtain approx 5,4% bound PO |
| 14 | Acid converted sago starch treated with sodium tripolyphosphate | Sago starch treated with approx 0.7% HCl at 52 C until a approx 59.5WF is obtained and further treated with STP to obtain approx 0.43% bound PO4 |
| 15 | Tapioca canary pyrodextrin | Tapioca starch treated with anhydrous hydrogen chloride gas to a pH of approx 2.8 and further dry roasted to a maximum temperature of 154 C and held at temperature until approx 100% solubility and approx 2.2 ABF viscosity is obtained |
| 16 | Waxy corn starch enzymatically debranched | dispersed waxy corn starch treated with approx 6% Promozyme 400L (from Novo) until approx 85% short-chain-amylose is obtained and recovered by spray-drying |

(continued)

| ID # | Short Description | Starch Preparation |
|---|---|---|
| 17 | Acid converted potato starch (60 WF) | potato starch treated with up to approx. 2.0% sulfuric acid at 52 C until a desired WF up to 60 is obtained |

B. Ice Cream Preparation

Three separate low fat (5%) ice cream formulations were prepared according to the formulation and procedure defined below -

**Table II - Formulation for Low Fat (5%) Ice Cream Mix**

| Ingredients | Control Formula (%) | 2% Starch Formula (%) | 4% Starch Formula (%) |
|---|---|---|---|
| Heavy Cream | 13.10 | 13.10 | 13.10 |
| Skim Milk | 60.80 | 60.80 | 60.80 |
| Skim Milk Powder (NFDM) | 4.66 | 4.66 | 4.66 |
| Sucrose | 10.00 | 10.00 | 10.00 |
| Corn Syrup Solids DE 42 | 5.50 | 4.50 | 3.50 |
| Corn Syrup Solids DE 24 | 5.50 | 4.50 | 3.50 |
| Stabilizer/Emulsifier Blend | 0.44 | 0.44 | 0.44 |
| Starch | - | 2.00 | 4.00 |
| **Total** | 100.00 | 100.00 | 100.00 |

Forty (40) percent of the total sucrose and the emulsifier/stabilizer blend were dispersed in the skim milk and mixed for five (5) minutes. A dry blend of NFDM, the remaining sucrose, corn syrup solids and the starch product to be evaluated (as required) was added and mixed for ten (10) minutes. The heavy cream was then added to the mixture, and the mixture gently blended so as to avoid foaming. With all ingredients blended together, the mixture was then pasteurized, homogenized and cooled to 4°C, respectively. Pasteurization was performed at 82°C for thirty (30) seconds, and homogenization was done in two stages, first at 17 MPa and then at 3.4 MPa. Flavoring was then added to the ice cream. The ice cream mixture was aged overnight at 4°C. This mixture was then frozen in a continuous freezer (Technogel 100, available from Waukesha Cherry-Burrell, Delavan, Wisconsin) to an overrun of 100% by keeping the flow rate constant and adjusting the air supply. The mixture was filled into eight ounce (237 ml) sample cups, cooled to -20°C, and then hardened at -30°C for 24 hours. The resulting ice cream contains approximately 5% butterfat, 10% milk solids non-fat ("MSNF"), and 37% solids, based on a calculation using typical nutritional data. Each sample cup was subjected to heat shock treatment as described in the following Section C prior to further evaluation.

C. Heat Shock Stability Test

Temperature fluctuation in the distribution chain was simulated by exposing all ice cream samples in their containers to 12 temperature cycles in a freezer (model 34-25 commercially available from ScienTemp Corporation, Adrian, Michigan). The freezer was filled with one layer of 100 samples so that airflow could occur around all samples, Cycling conditions were - 18°C for 12 hours followed by -6.7°C for twelve hours.

D. Melt Down Test

An ice cream sample was placed on a screen in a temperature-controlled cabinet at 19°C. A receptacle was placed on a balance below the screen to collect and weigh the meltdown or drip loss ($m_d$) over a time period of up to four (4) hours. The initial weight of the ice cream ($m_0$) was determined and kept within a ten percent (10%) standard deviation. Weight of the drip loss ($m_d$) was recorded over the four-hour time period. Total melt down (MD, %) was determined at the end of the four-hour period according to the following equation -

$$MD = \frac{m_d}{m_0} x100$$

E. Sensory Evaluation

Samples were evaluated using the descriptive analysis method with a 15-point scale. During each session 2 test samples were evaluated by an expert panel for 10 different attributes as listed and defined below. A control sample that had gone through temperature cycling was used as a base reference and presented with the samples. Each test sample was evaluated twice to reduce the standard deviation.

Definitions of descriptive analysis:

1. "Descriptive analysis provides quantitative descriptions of products, based on perception of a group of trained subjects. The description takes into account all sensations that are perceived when a product is evaluated." (On-line training course, U.C. Davis, The Regents of the University of California and Dr. Jean-Xavier Guinard, 2004).

2. "All descriptive analysis methods involve the detection (discrimination) and the description of both the qualitative and quantitative sensory aspect of a product by trained panels of 5-100 judges (subjects).......These qualitative factors include terms which define the sensory profile or picture or thumbprint of the sample.....The intensity or quantitative aspect of a descriptive analysis expresses the degree to which each of the characteristics is present. This is expressed by the assignment of some value along a measurement scale." ("Sensory evaluation techniques" M.Meilgaard, G.V. Civille, B.T.Carr, 3rd edition 1999).

3. DESCRIPTORS

| | |
|---|---|
| Firmness - | Force required to compress the sample with teeth and tongue. |
| Coldness - | Tendency to cool surfaces of the mouth. |
| Cohesiveness - | Tendency to resist loss of structure during chewing. A cohesive product is elastic and maintains structure during chewing. A non-cohesive product is brittle, easily fragments or is crumbly in texture, and provides a clean bite through. |
| Rate of Breakdown - | Rate at which a product softens or fragments upon chewing. |
| Ice crystals - | Perception of "grittiness" caused by the number and size of ice crystals. Ideally, no ice crystals can be detected in the mouth. |
| Melt Thickness - | Viscosity of film left on the palate. |
| Smoothness - | Tendency of the film on the palate to be smooth, slick and non-sticky. |
| Gumminess - | Residual film in the mouth is tacky, sticking the tongue to the surfaces of the mouth. |
| Vanilla Flavor - | Authentic note of vanilla and cream. |
| Off-Note - | Any inappropriate aroma. |

F. Rheological Testing Procedure

Each of the ice cream mixes collected after the homogenization step in Section B above was poured into molds and held in the freezer at -18°C. One mold of each formulation was removed from the freezer and tested on the rheometer as soon as it equilibrated to 25°C. Another mold was removed from the freezer and placed in a constant temperature bath at -6.7°C where it was held for 7-8 days, before it was removed, equilibrated to 25°C and tested on the rheometer.

A sequence of rheology experiments was performed on each sample as described in Table III below -

**Table III - Rheology Tests Run on Each Sample**

| Test Name | Specific Conditions |
|---|---|
| Dynamic Strain Sweep | $\omega$=1 rad/s, $\gamma_{min}$=.1%, $\gamma_{max}$=100% |
| Dynamic Frequency Sweep | $\gamma < \gamma_{cr}$, $\omega_{min}$=1 rad $s^{-1}$, $\omega_{max}$=100 rad $s^{-1}$ |
| Steady Shear Step Rate | Shear rate=1$s^{-1}$, length of experiment=120 s |

(continued)

| Test Name | Specific Conditions |
|---|---|
| Steady Shear Rate Sweep | Time per shear rate=30s, shear rate range=1-100s$^{-1}$ |

In Table III, "min" refers to minimum, "max" refers to maximum, "ω" refers to frequency, "γ" refers to strain, "$\gamma_{cr}$" refers to critical strain, "rad" refers to radians, and "s" refers to seconds. Rheological tests described above are according to standard rheological terms.

Experiments on the ice cream mixes in the molds were all done at 25°C. The data tabulated from these experiments includes: from the dynamic frequency sweep test, the elastic modulus (G', Pascal) at 10 rad/s and tan δ at 10 rad/s; from the dynamic strain sweep, $\gamma_{cr}$ and the peak in steady shear viscosity; from the shear step rate, viscosity (η, Pascal-sec) at 1/s, η after 120s at 1/s and the final η after 120s at 1/s; and the steady shear rate sweep, or η at 100/s (Pascal-sec).

G. Differential Scanning Calorimetry Procedure for Determining Tg'

Differential scanning calorimetry measurements were performed in a Perkin-Elmer DSC-7 with CCA cooling system (Norwalk, Connecticut). Liquid $N_2$ was used for sub-ambient temperature experiment. The instrument was calibrated with indium and water. An empty stainless-steel pan was used as a reference.

Approximately 10 mg of starch (dry base) was weighed into large volume stainless steel pan. Extra water was added to the sample to reach the desired moisture content. Each starch was tested at two solid levels (40% and 20%) using quench cooling and annealing method to ensure that the measured Tg' and Wg' values are close to real values. The starch/water mixture was first heated from 10°C to 160°C at 10°C/min to ensure that all the starch was fully dispersed in water. Then the starch/water mixture was quench cooled to -70°C and was held for 15 minutes to ensure maximum amount of ice formed. The sample was then heated at 2.5°C/min. to detect the Tg' and the amount of the frozen water. To maximize the amount of ice formed in the ice cream mix, the samples were also subjected to an annealing procedure before temperature scanning. The sample was held at the temperature slightly above Tg' for 30 minutes and then was cooled to below Tg' at 1.0°C/min and held at -40°C for another 10 minutes. The samples were then heated at 2.5°C/min to 20°C. The middle point of the glass transition was reported as Tg', and the ice melting enthalpy was used to calculate the Wg' value of the starch. Duplicate tests were run for each solid level or cooling condition. The average values from those tests that generated maximum amount of ice were reported.

H. Altitude Test

Ice cream samples were collected in 400ml stainless steel custom made cups. The cups were overfilled, hardened for 24 hours at -30°C according to the standard procedure and tested the next day (without heat shock treatment). Before the test the ice cream in each cup was leveled off and the cup was placed in a desiccator attached to a vacuum pump. This was stored in a Styrofoam box with dry ice in order to maintain the temperature throughout the test. The test was performed at a temperature of -18°C and a pressure of -67.73 kPa (-20 inch Hg) for 15 minutes. The expansion was measured after 15 minutes and is expressed in mm or illustrated in a photo. After the test the samples were kept in a freezer at -18°C for 24 hours. Shrinkage was then determined by measuring the amount of glycol used to fill the gap between the ice cream and the cup (reported in g glycol). Two repeats were run in order to ensure reproducibility.

EXPERIMENTAL - RESULTS

1. Melt Down and Sensory Results

The effect of the starch according to the present invention on the melt down on ice cream is shown in Figure 1. From Figure 1 it is seen that unmodified or lightly converted starches are preferred. From Figure 1 it is also seen that waxy starches are preferred as the base starch, more preferably, waxy corn starches. Additionally, it can be seen that certain amylose-containing starches provide effective reduction of melt down.

**Table IV - Meltdown/Ice Crystal Data on Ice Creams with Starch**

| Sample ID | Meltdown% | Ice Crystals |
|---|---|---|
| Starch 16 at 2% | 43.00 | 5.95 |

(continued)

| Sample ID | Meltdown% | Ice Crystals |
|---|---|---|
| Starch 16 at 4% | 23.93 | 4.45 |
| Starch 2 at 2% | 16.00 | 4.7 |
| Starch 3 at 2% | 21.00 | 4.85 |
| Starch 4 at 2% | 37.00 | 4.75 |
| Starch 4 at 4% | 4.00 | 2.65 |
| Starch 8 at 2% | 44.00 | 4.6 |
| Control ice cream without starch | 59.00 | 7.5 |
| Starch 12 at 2% | 79.00 | 6.45 |
| Starch 12 at 4% | 97.00 | 3.45 |
| Starch 14 at 2% | 25.00 | 4.8 |
| Starch 13 at 2% | 88.00 | 5.15 |
| Starch 7 at 2% | 49.00 | 4.85 |
| Starch 1 at 2% | 14.37 | 4.7 |
| Starch 6 at 2% | 19.73 | 5.45 |
| Starch 9 at 2% | 86.18 | 5.35 |
| Starch 10 at 2% | 80.09 | 5.1 |
| Starch 5 at 2% | 37.10 | 6.7 |
| Commercial 10% fat ice cream | 44.00 | 4.25 |

Those skilled in the art recognize that certain processing conditions (*e.g.,* reduced overrun) and variations in the formula (*e.g.,* higher fat content) can result in improved melt down. The present invention shows that the addition of certain starches improves meltdown, even more than presently used emulsions and stabilizers. Further, Table IV illustrates that certain starches provide an improved reduction in meltdown of a frozen dessert (*e.g.,* starches 2-4, 8 and 16) versus frozen desserts formulated without the functional starch.

2. <u>Rheological Testing Results</u>

The ice cream mixes show significant changes in rheology during storage at -6.7°C. For most of the samples, tan δ decreases over time, which indicates the development of gelled structures under frozen conditions. Trends are similar for low-fat and non-fat formulas. After 7-10 days, the least gelled (highest tan δ) samples are Sample 10 and Sample 12 while the most gelled (lowest tan δ) samples are Sample 1, Sample 2 and Sample 6. The viscosity of each mix increased or stayed constant throughout the time that the samples were held at -6.7°C. The modulus, G', showed similar behavior to the viscosity, η.

**Table V – Rheology Data on Ice Cream Mixes with Starch**

| Sample | tan δ at 10 rad/s fresh | η at 1/s fresh | G' at 10 rad/s fresh | tan δ at 10 rad/s @ 7-8 days | η a at 1/s @ 7-8 days | G' at 10 rad/s @ 7-8 days |
|---|---|---|---|---|---|---|
| Starch 16 at 2% | 1.5724 | 0.2476 | 0.7279 | 0.8978 | 0.9250 | 3.2386 |
| Starch 16 at 4% | 1.2644 | 0.4205 | 1.4463 | 0.472 | 3.8639 | 22.018 |
| Starch 2 at 2% | 1.6801 | 0.3120 | 1.6682 | 0.2538 | 15.2720 | 193.6 |
| Starch 3 at 2% | 2.0387 | 0.2614 | 0.9887 | 0.3665 | 7.9273 | 52.157 |
| Starch 4 at 2% | 2.2618 | 0.2089 | 0.6088 | 0.3597 | 6.4949 | 48.769 |
| Starch 4 at 4% | 1.8449 | 0.3314 | 1.5129 | 0.3263 | 46.5130 | 865.84 |
| Starch 8 at 2% | 1.9657 | 0.2037 | 0.5129 | 0.7069 | 2.8037 | 12.249 |
| Control ice cream without starch | 1.7367 | 0.1982 | 0.5058 | 1.6172 | 0.3059 | 0.9667 |
| Starch 12 at 2% | 2.2580 | 0.2277 | 0.686 | 1.93705 | 0.2699 | 0.9439 |
| Starch 12 at 4% | 2.0553 | 0.3717 | 1.4746 | 1.6779 | 0.5526 | 2.5249 |
| Starch 14 at 2% | 0.9583 | 1.2793 | 3.9336 | 0.36985 | 12.4740 | 91.049 |
| Starch 13 at 2% | 2.1291 | 0.2271 | 0.6886 | 1.3858 | 0.5244 | 1.9084 |
| Starch 7 at 2% | 1.3449 | 0.5992 | 1.7108 | 0.46385 | 4.7607 | 20.386 |
| Starch 1 at 2% | 1.9E+00 | 5.1E-01 | 2.0E+00 | 0.31 | 1.2E+01 | 8.8E+01 |
| Starch 6 at 2% | 7.2E-01 | 2.6E+00 | 9.5E+00 | 0.31 | 1.8E+01 | 1.3E+02 |
| Starch 9 at 2% | 2.1E+00 | 4.4E-01 | 1.8E+00 | 1.4 | 7.6E-01 | 3.1E+00 |
| Starch 10 at 2% | 2.1E+00 | 7.0E-01 | 2.5E+00 | 1.5 | 9.2E-01 | 4.2E+00 |
| Starch 5 at 2% | 1.5E+00 | 5.2E-01 | 1.5E+00 | 0.6 | 1.8E+00 | 5.8E+00 |

The correlation between the reduced melt down of ice cream and the ability of the starch to gel in the model ice cream system under freezer conditions is shown in Figure 2. As can be seen from Figure 2, a starch having a tan δ of less than about 1.0 results in a frozen dessert having a melt down of about fifty percent (50%) or less. Starches having a tan δ of less than about 0.4 resulted in an ice cream with the slowest melt down.

As previously noted, the results of the effectiveness of the above samples with respect to melt down are illustrated in Figure 1. Those frozen desserts containing about two to about four percent of a starch that gels during freezing, particularly those starches having a tan δ less than about one, resulted in reduced melt down and improved shape retention after exposure to heat shock.

3. <u>Tg' Results</u>

Those starches identified as providing good ice crystal growth inhibition capability included native starches, acid or enzyme converted starches, or chemically modified versions of those starches having a DE less than about 8, and a Tg' greater than about -6°C (Tg' > ~ -6°C) and, water binding property of Wg' greater than about 0.30 (Wg' > ~ 0.30) (unfreezable water weight fraction in the unfrozen glass state). Tg' and Wg' are determined by the calorimetry method described above. The results are provided in Table VI below -

**Table VI**

| Starch Sample | Tg' (°C) | Wg'(g/g total glass) | Iciness |
|---|---|---|---|
| Starch 1 | -4.521 | 0.309 | 4.70 |
| Starch 4 | -5.627 | 0.352 | 4.00 |
| Starch 8 | -5.321 | 0.325 | 4.60 |
| Starch 11 | -5.993 | 0.308 | 4.70 |
| Starch 7 | -5.127 | 0.310 | 4.85 |
| Starch 14 | -5.550 | 0.318 | 4.80 |
| Starch 12 | -7.766 | 0.322 | 6.45 |
| Starch 13 | -8.370 | 0.257 | 5.30 |
| Starch 16 | -7.021 | 0.300 | 5.95 |
| Starch 15 | -8.651 | 0.269 | 5.10 |

In the present invention, corn syrup solids were reduced to keep the total solids content of the formulation constant. Adding starch to replace fat can affect the glass transition temperature, freezing temperature and the 'water binding' property of the serum phase in the frozen state. Starches were compared at 2% and 4% usage levels. At about 3% to about 4% usage level, the starches of the present invention function in the absence of other stabilizers, providing improved heat shock stability characterized by a reduction in ice crystals as compared to a non-starch control (see Section 4 below). Higher levels of starch generally further improve performance with respect to melt down and heat shock stability. However, above about 4%, negative textural attributes occur.

4. Low Fat Ice Cream with Starch

Ice cream formulations were prepared according to the formulation defined in Table VII below -

**Table VII - Ice cream formulation (5% butterfat, 3% starch 4, no other stabilizer)**

| Ingredients | Control Formula (%) | 3% Starch Formula (%) |
|---|---|---|
| Heavy Cream | 13.10 | 13.10 |
| Skim Milk | 60.80 | 60.80 |
| Skim Milk Powder (NFDM) | 4.66 | 4.66 |
| Sucrose | 10.00 | 10.00 |
| Corn Syrup Solids DE 42 | 5.50 | 4.15 |
| Corn Syrup Solids DE 24 | 5.50 | 4.15 |
| Emulsifier/Stabilizer Blend | 0.44 | - |
| Emulsifier | - | 0.14 |
| Starch 4 | - | 3.00 |
| Total | 100.00 | 100.00 |

As in the 'Ice Cream Preparation' section above, when starches of the present invention were added, the 42DE corn syrup solids and the 24DE corn syrup solids were reduced to keep the total solids constant. However, here the stabilizer was also omitted. As noted in Section 3 *supra,* the starches of the present invention function in the absence of other stabilizers. Each ice cream mix was prepared according to the procedure described in the 'Ice Cream Preparation' section.

Figure 3 is illustrative of a frozen dessert made with 3% starch according to the formula described in Table VII above, *i.e.,* without any stabilizer. This frozen dessert was subjected to the heat shock test described in Section C with the exception that the ice cream was cycled out of the container. From Figure 3 it is seen that the heat shock treated frozen dessert with 3% starch retained its shape. Figure 4 quantitatively illustrates the relationship between meltdown and shape retention over time.

5. Non-fat Ice Cream Mix with Starch and Stabilizer

Ice cream formulations were prepared according to the formulation defined in Table VIII below -

**Table VIII - Rheological Ice Cream Formulation**

| Ingredients | 1 |
|---|---|
| | 0% Fat |
| Heavy Cream | 0.00 |
| Skim Milk | 72.67 |
| Non-Fat Dry Milk | 4.82 |
| Sucrose | 10.50 |
| 42DE Corn Syrup Solids | 5.78 |
| 24DE Corn Syrup Solids | 5.78 |
| CREST Stabilizer/Emulsifier | 0.46 |

As in the 'Ice Cream Preparation' section above, when starches of the present invention were added, the 42DE corn syrup solids and the 24DE corn syrup solids were reduced equally to keep the total solids constant. Each ice cream mix was prepared according to the procedure described in the 'Ice Cream Preparation' section. Seven starches were evaluated in the non-fat formula at 2.1% wt/wt.

The ice cream mixes show significant changes in rheology during storage at -6.7°C. For most of the samples, tan δ decreases over time, which indicates the development of gelled structures under frozen conditions. After 7-10 days, the least gelled (highest tan δ) sample is Sample 10 while the most gelled (lowest tan δ) samples are Sample 1 and Sample 6. The viscosity of each mix increased or stayed constant throughout the time that the samples were held at -6.7°C. The modulus, G', showed similar behavior to the viscosity.

**Table IX – Rheology Data on Non-fat Ice Cream Mixes**

| Sample | tan δ at 10 rad/s fresh | η at 1/s fresh | G' at 10 rad/s fresh | tan δ at 10 rad/s @ 7-8days | η a at 1/s 7-8 days | G' at 10 rad/s 7-8days |
|---|---|---|---|---|---|---|
| Starch 1 at 2.1% | 3.9E+00 | 2.1E-01 | 4.4E-01 | 2.6E-01 | 1.5E+01 | 1.0E+02 |
| Starch 6 at 2.1% | 9.0E-01 | 1.3E+00 | 4.2E+00 | 3.1E-01 | 8.0E+00 | 7.4E+01 |
| Starch 10 at 2.1% | 3.1E+00 | 3.2E-01 | 7.8E-01 | 2.1E+00 | 5.0E-01 | 1.5E+00 |
| Starch 4 at 2.1% | 4.0E+00 | 5.8E-02 | 1.2E-01 | 3.8E-01 | 7.8E+00 | 4.6E+01 |
| Starch 5 at 2.1% | 1.5E+00 | 4.1E-01 | 8.4E-01 | 3.9E-01 | 2.6E+00 | 1.4E+01 |

not according to the invention
← not according to the invention

The data further shows that, while frozen dessert mixes prepared with functional amylose-containing starches have a drop in tan δ that occurs quickly after freezing, waxy starches drop more gradually in tan δ when held at frozen conditions for extended periods. This illustrates that functional amylose-containing starches are preferred over waxy starches for use in frozen desserts that are not subject to extensive temperature cycling.

6. Altitude Testing

Ice cream samples were prepared according to the formulation defined in Table X below

**Table X - Ice cream formulation (5% butterfat, 3% starch 4 or 17, no other stabilizer)**

| Ingredients | Control Formula (%) | 3% Starch Formula (%) |
|---|---|---|
| Heavy Cream | 13,10 | 13.10 |
| Skim Milk | 60.80 | 60.80 |
| Skim Milk Powder (NFDM) | 4.66 | 4.66 |
| Sucrose | 10.00 | 10.00 |
| Corn Syrup Solids DE 42 | 5.50 | 4.15 |
| Corn Syrup Solids DE 24 | 5.50 | 4.15 |
| EmulsiflerlStabilizer Blend | 0.44 | - |
| Emulsifiers | - | 0.14 |
| Starch | - | 3.00 |
| Total | 100.00 | 100.00 |

The samples were tested according to Experimental Procedure H described above. Table XI below shows that samples containing 3% starch show a reduced amount of shrinkage of the ice cream when exposed to a defined vacuum. This is further illustrated in Figure 5. While the control in Figure 5 shows significant expansion, the starch containing samples do not expand under these test conditions. Trials in a higher fat formula and in the presence of other stabilizers or the evaluation after heat shock provided similar results.

**Table XI - Shrinkage results of ice cream expressed in g glycol**

| Sample | Initial Weight (g) | Final Weight (g) | Glycol Added (g) |
|---|---|---|---|
| Control | 351.4 | 390.7 | 39.3 |
| Control | 378.0 | 415.9 | 37.9 |
| 3% Starch 4 | 370.8 | 393.5 | 22.7 |
| 3% Starch 4 | 331.9 | 357.0 | 25.1 |
| 3% Starch 17 | 311.6 | 325.4 | 13.8 |
| 3% Starch 17 | 366.8 | 386.4 | 19.6 |

not according to the invention

From the above Experimental results it is seen that certain starches function better than others. For example, with respect to shape retention and changes in altitude, useful starches include amylopectin starches such as waxy corn, waxy tapioca or waxy potato. These starches can be used in their native form, crosslinked, and/or lightly converted (*e.g.,* up to about 80 WF). Other useful starches include amylose-containing starches from a variety of bases such as sago, tapioca, potato, corn or rice. These amylose-containing starches can be in their native form or lightly converted (*e.g.,* up to about 80 WF).

For reducing iciness, useful starches include amylopectin starches that are native or lightly converted (*e.g.,* up to about 80 WF); amylose-containing starches from a variety of bases such as sago, tapioca, potato, corn or rice in their native form or lightly converted (*e.g.,* up to about 80 WF); and amylose and amylopectin starches that are crosslinked and/or lightly stabilized. The degree and balance of crosslinking and stabilization can be determined so that it meets the Tg' and Wg' criteria.

**Claims**

1. Frozen ice cream dessert comprising a functional starch comprising a degraded or converted starch having a water fluidity ("WF") of from 20 to 65 able to gel during freezing conditions, wherein the frozen dessert has a tan $\delta$ of 0.4 or less, wherein the functional starch comprises a waxy starch.

2. Frozen ice cream dessert according to claim 1 wherein the functional starch provides a reduction in the meltdown of the frozen dessert versus frozen desserts prepared without the functional starch.

3. Frozen ice cream dessert according to any of the preceding claims wherein the frozen dessert is a novelty frozen dessert and the starch provides retention in the shape of the frozen dessert when the novelty frozen dessert is heat shock treated for up to 12 freeze/thaw cycles, each freeze/thaw cycle lasting up to 24 hours.

4. Frozen ice cream dessert according to any of the preceding claims wherein the starch provides the frozen dessert a reduced amount of shrinkage of the ice cream when exposed to a defined vacuum as compared to a frozen dessert without the starch.

5. Frozen ice cream dessert according to any of the preceding claims comprising a functional starch having a glass transition temperature ($T_g$') of -6 °C or greater, a water binding property ($W_g$') of 0.30 g/g or greater, wherein the functional starch provides improved ice crystal inhibition in a frozen dessert versus a frozen dessert without the functional starch.

6. Process for preparing a frozen ice cream confectionary, the process comprising the steps of:

   Preparing a mixture of ingredients for the frozen confectionary, the mixture including a functional starch comprising a degraded or converted starch having a water fluidity ("WF") of from 20 to 65 able to gel during freezing conditions,
   wherein the mixture has a tan $\delta$ of 0.4 or less,
   freezing the mixture within a temperature range of from -2 °C to -8 °C;
   wherein the step of freezing effects gelling of the starch, and
   wherein the frozen confectionary has an improvement in the melt down over frozen confectionary that do not have the starch as an ingredient, wherein the starch comprises waxy starch.

## Patentansprüche

1. Gefrorenes Eiscreme-Dessert, das eine funktionelle Stärke umfasst, welche eine degradierte oder konvertierte Stärke mit einer Wasserfluidität ("WF") von 20 bis 65 umfasst, die fähig ist, während Gefrierbedingungen zu gelieren, wobei das gefrorene Dessert einen tan δ-Wert von 0,4 oder weniger hat, wobei die funktionelle Stärke eine Wachsstärke umfasst.

2. Gefrorenes Eiscreme-Dessert nach Anspruch 1, wobei die funktionelle Stärke eine Verringerung beim Zusammenschmelzen des gefrorenen Desserts gegenüber gefrorenen Desserts, die ohne die funktionelle Stärke hergestellt wurden, bereitstellt.

3. Gefrorenes Eiscreme-Dessert nach einem der vorangehenden Ansprüche, wobei das gefrorene Dessert ein neuartiges gefrorenes Dessert ist und die Stärke eine Retention der Form des gefrorenen Desserts bereitstellt, wenn das neuartige gefrorene Dessert für bis zu 12 Gefrier-/Tau-Zyklen hitzeschockbehandelt wird, wobei jeder Gefrier-/Tau-Zyklus bis zu 24 Stunden dauert.

4. Gefrorenes Eiscreme-Dessert nach einem der vorangehenden Ansprüche, wobei die Stärke dem gefrorenen Dessert einen verringerten Schrumpfungsgrad der Eiscreme verleiht, wenn diese einem definierten Vakuum ausgesetzt wird, verglichen mit einem gefrorenen Dessert ohne die Stärke.

5. Gefrorenes Eiscreme-Dessert nach einem der vorangehenden Ansprüche, das eine funktionelle Stärke mit einer Glasübergangstemperatur ($T_{g'}$) von -6 °C oder höher, eine Wasserbindungseigenschaft ($W_{g'}$) von 0,30 g/g oder größer umfasst, wobei die funktionelle Stärke eine verbesserte Eiskristall-Inhibierung in einem gefrorenen Dessert im Vergleich zu einem gefrorenen Dessert ohne die funktionelle Stärke bereitstellt.

6. Verfahren zur Herstellung einer gefrorenen Eiscreme-Süßware, wobei das Verfahren die folgenden Schritte umfasst:

    Herstellen eines Gemisches von Ingredienzien für die gefrorene Süßware, wobei das Gemisch eine funktionelle Stärke enthält, welche eine degradierte oder konvergierte Stärke mit einer Wasserfluidität ("WF") von 20 bis 65 umfasst, die fähig ist, während Gefrierbedingungen zu gelieren,
    wobei das Gemisch einen tan δ-wert von 0,4 oder weniger hat,
    Gefrieren des Gemisches innerhalb eines Temperaturbereichs von -2 °C bis -8 °C;
    wobei der Schritt des Gefrierens ein Gelieren der Stärke bewirkt und
    wobei die gefrorene Süßware eine Verbesserung beim Zusammenschmelzen gegenüber einer gefrorenen Süßware, die die Stärke nicht als Ingrediens hat, hat, wobei die Stärke Wachsstärke umfasst.

## Revendications

1. Crème dessert glacée comprenant de l’amidon fonctionnel qui comprend de l’amidon dégradé ou converti ayant une fluidité dans l’eau ("WF") de 20 à 65 capable de geler dans des conditions de congélation, où le dessert glacé a une tangente delta de 0,4 ou moins, où l’amidon fonctionnel comprend de l’amidon de grains cireux.

2. Crème dessert glacée selon la revendication 1, dans laquelle l’amidon fonctionnel permet de réduire le ramollissement du dessert glacé par rapport à des desserts glacés préparés sans l’amidon fonctionnel.

3. Crème dessert glacée selon l’une des précédentes revendications dans laquelle le dessert glacé est un nouveau dessert glacé et l’amidon permet de garder la forme du dessert glacé lorsque le nouveau dessert glacé subit un traitement à choc thermique jusqu’à 12 cycles de gel/dégel, chaque cycle de gel/dégel pouvant durer jusqu’à 24 heures.

4. Crème dessert glacée selon l’une des précédentes revendications dans laquelle l’amidon procure au dessert glacé une réduction de la quantité de flétrissement de la crème glacée lorsqu’elle est exposée à un vide défini en comparaison avec un dessert glacé sans l’amidon.

5. Crème dessert glacée selon l’une des revendications précédentes comprenant de l’amidon fonctionnel ayant une température de transition vitreuse (Tg’) de -6°C ou plus, une propriété de liaison à l’eau ($W_g$’) de 0,30g/g ou plus, où l’amidon fonctionnel offre une meilleure inhibition de cristaux de glace dans un dessert glacé par rapport à un dessert glacé sans l'amidon fonctionnel.

6. Procédé destiné à préparer une confiserie en crème glacée, le procédé comprenant les étapes qui consistent :

à préparer un mélange d'ingrédients pour la confiserie glacée, le mélange comportant de l'amidon fonctionnel qui comprend de l'amidon dégradé ou converti ayant une fluidité dans l'eau ("WF") de 20 à 65 capable de geler dans des conditions de congélation,
où le mélange a une tangente delta de 0,4 ou moins,
à congeler le mélange dans une plage de températures de -2°C à -8°C ;
où l'étape de congélation permet la gélification de l'amidon, et
où la confiseries glacée présente une amélioration en termes de ramollissement par rapport à une confiserie glacée qui ne contient pas l'amidon comme ingrédient, où l'amidon comprend de l'amidon de grains cireux.

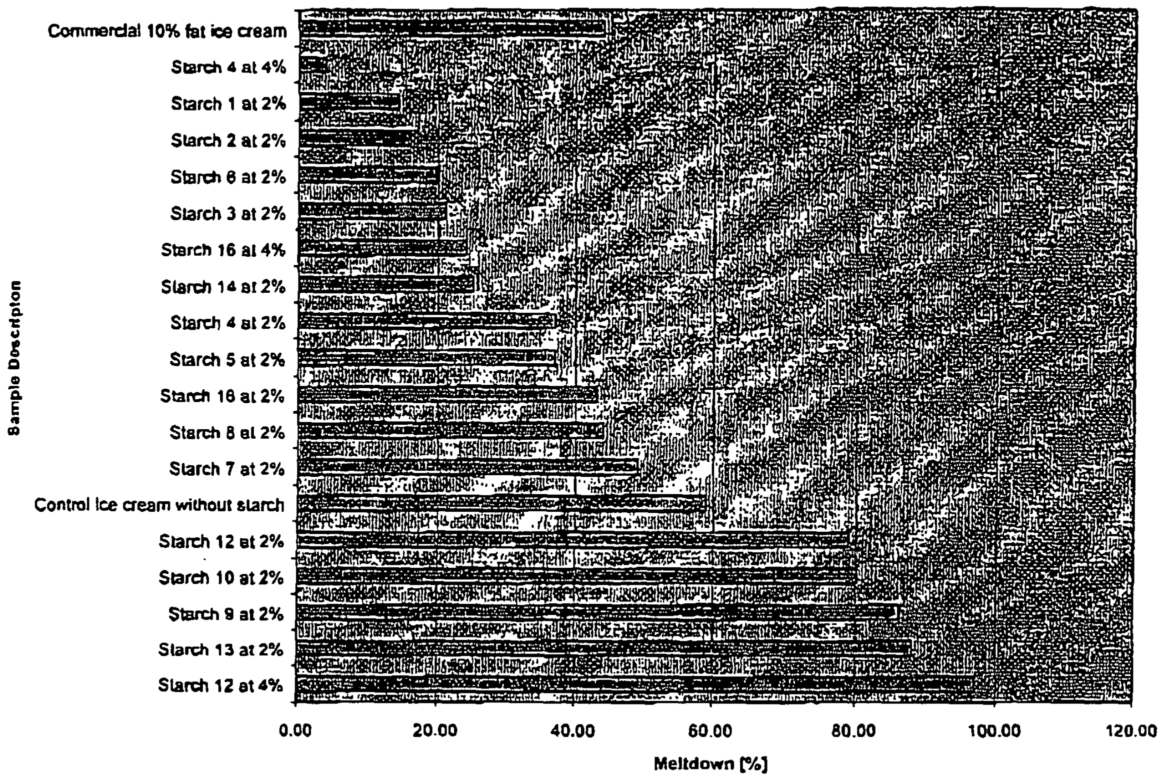


Figure 1. Graph illustrating percent melt down of various ice creams after 4 hours at 19°C

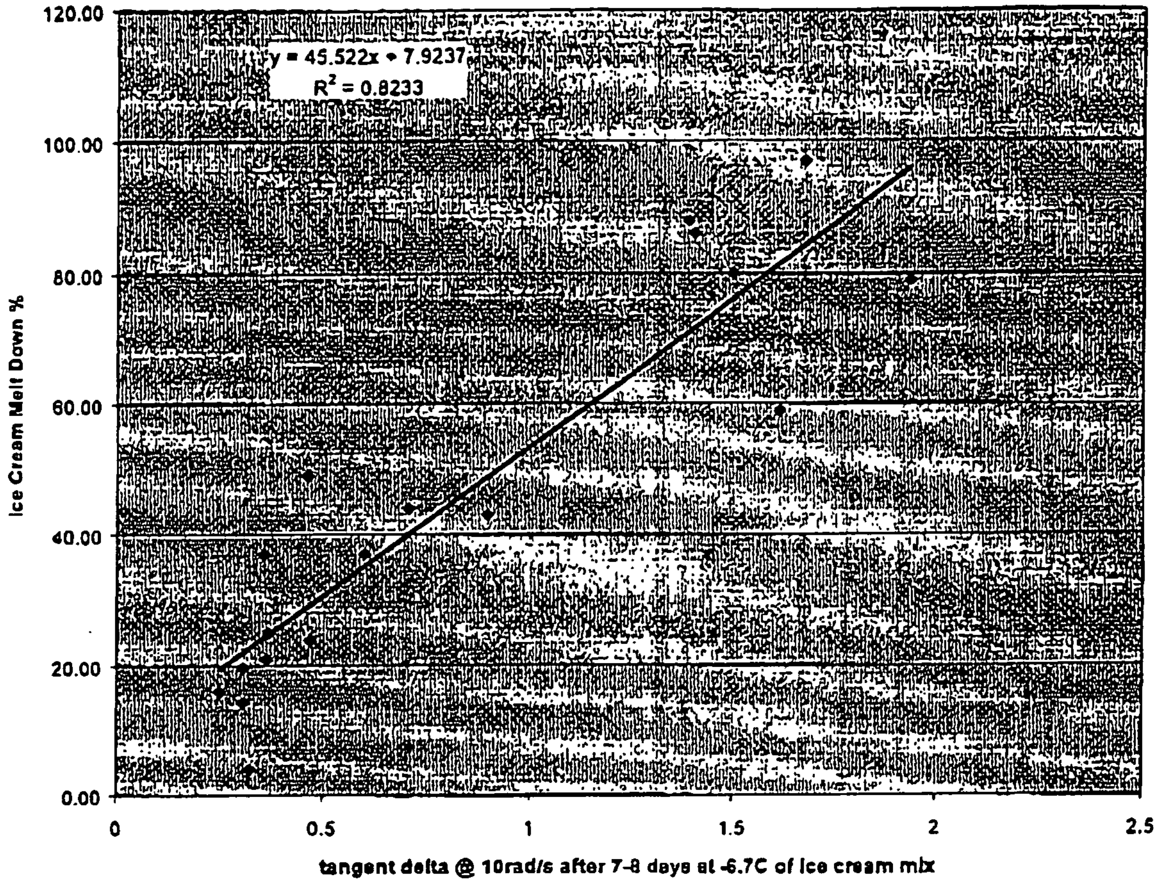


Figure 2. Graph illustrating correlation between melt down and tan δ (starches provided in Table IV)

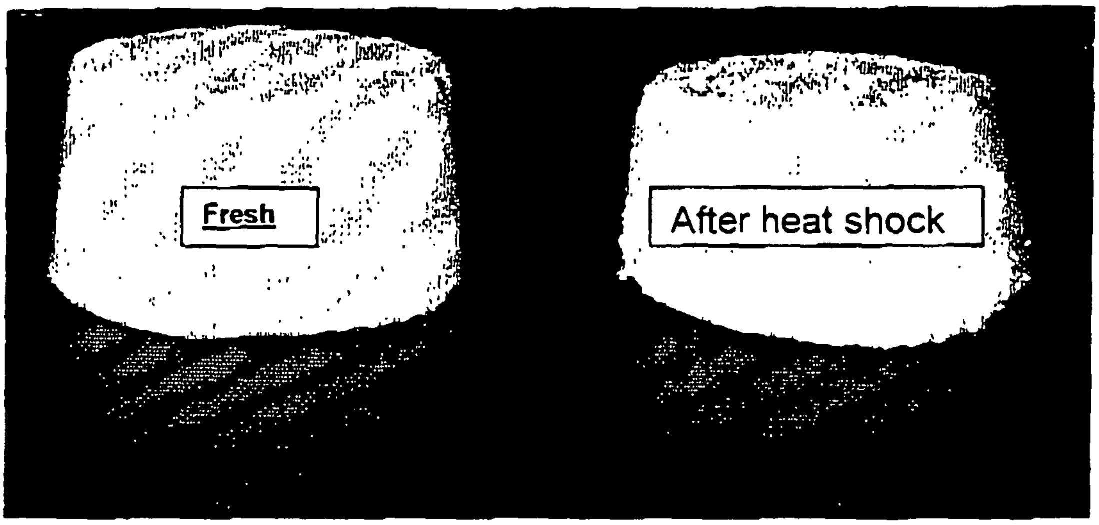


Figure 3. Photo of fresh and heat shocked ice cream containing 3% starch

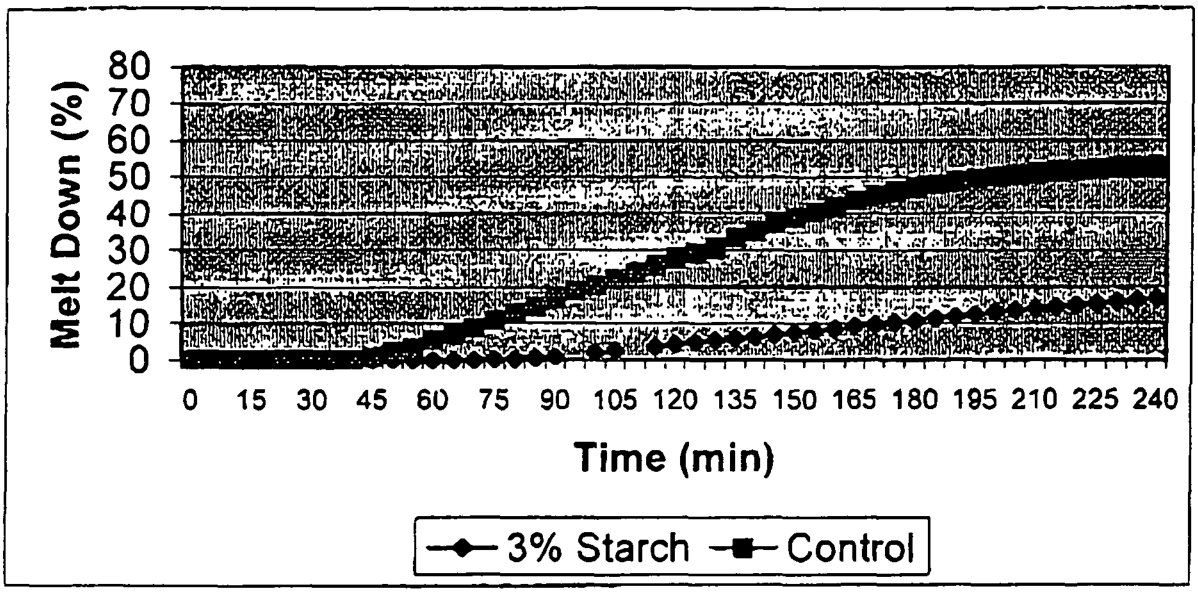


Figure 4. Melt curve of ice cream containing 3% starch

Control:

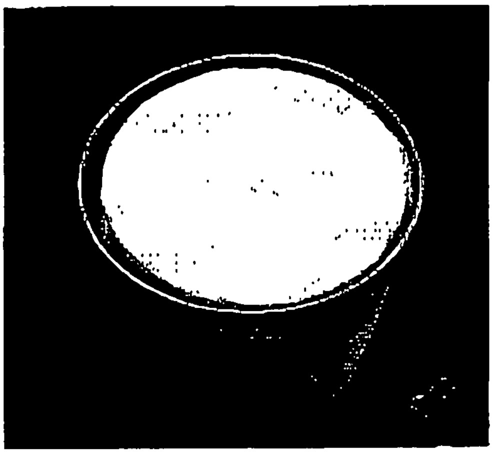

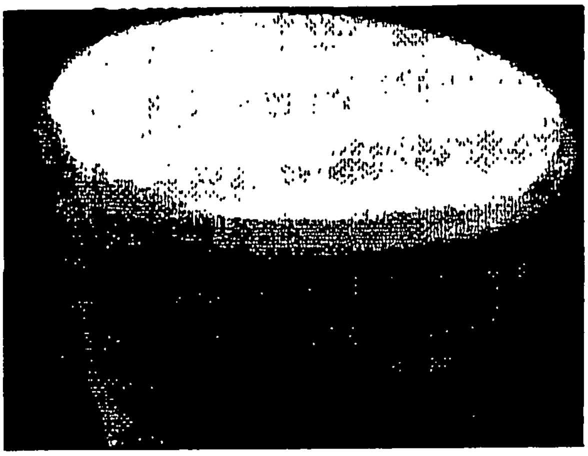

Shrinkage **Control Formula** Expansion

Starch #4:

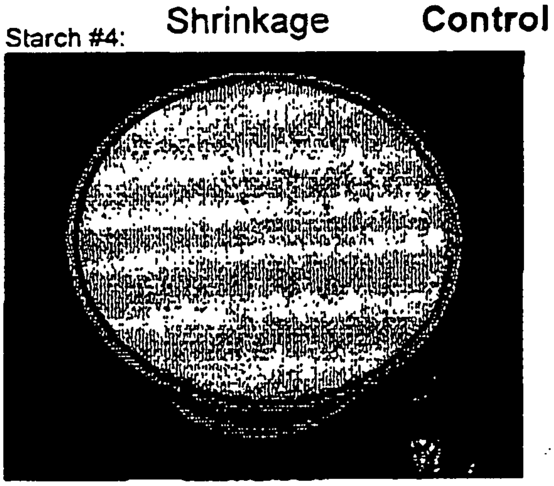

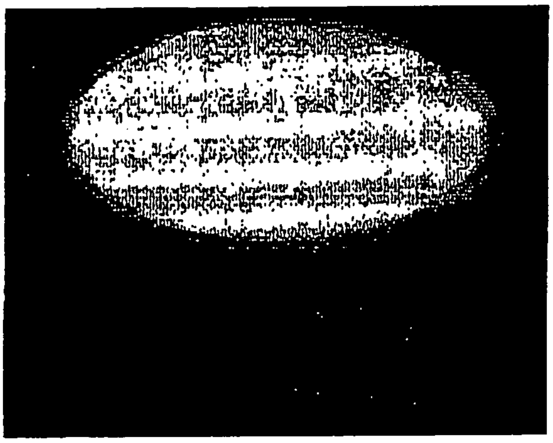

Shrinkage **3% Starch #4** Expansion

Starch #17:

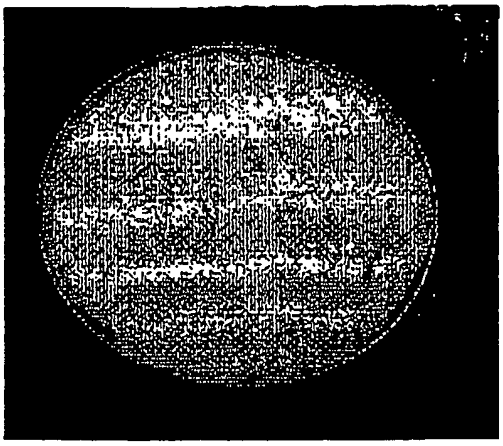

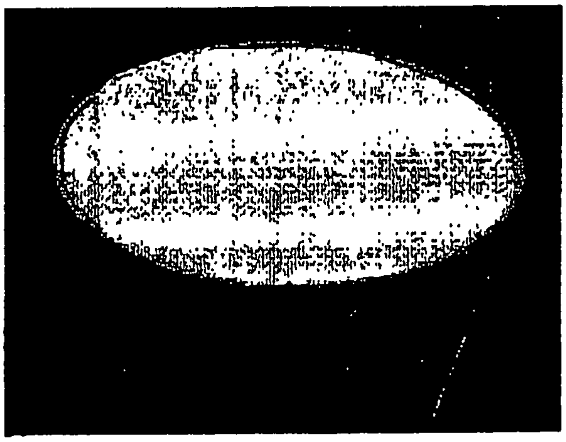

Shrinkage **3% Starch #17** Expansion

Figure 5. Photos of ice cream without starch and ice cream containing 3% starch

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4264637 A
- EP 1076067 A
- US 20030108649 A
- US 5175013 A
- US 5562937 A
- US 4510166 A
- WO 03015530 A
- EP 0784935 A
- WO 9504082 A
- US 2328537 A
- US 2801242 A
- EP 554818 A
- US 4477480 A
- US 5187272 A


### Non-patent literature cited in the description


- MODIFIED STARCHES: PROPERTIES AND USES. CRC Press, Inc, 1986
- **F.B. Ahmad ; P.A. Williams.** *Journal of Agric. Food Chem.,* 2001, vol. 49, 1578-86
- **M.Meilgaard ; G.V. Civille ; B.T.Carr.** Sensory evaluation techniques. 1999